# EUROPÄISCHE PATENTSCHRIFT

(11) **EP 2 899 879 B1**
(45) Veröffentlichungstag und Bekanntmachung des Hinweises auf die Patenterteilung: **08.01.2020**
(21) Anmeldenummer: 14003959.5
(22) Anmeldetag: 25.11.2014
(51) Int. Cl.: H02M 1/00, H02P 6/28, H02M 7/5395, H02P 27/08

(54) **Verfahren zum Betrieb sowie Vorrichtung zur Ansteuerung einer rotierenden bürstenlosen elektrischen Maschine**
Method for operation and device for controlling a rotating brushless electrical machine
Procédé de fonctionnement et dispositif de commande d'une machine à rotation électrique sans brosse

(30) Priorität: 24.01.2014 DE 102014000945
(43) Veröffentlichungstag der Anmeldung: 29.07.2015
(73) Patentinhaber: Brose Fahrzeugteile GmbH & Co. Kommanditgesellschaft, Würzburg, 97076 Würzburg (DE)
(72) Erfinder: Schwarzkopf, Johannes, DE - 97828 Marktheidenfeld (DE)
(74) Vertreter: FDST Patentanwälte

(56) Entgegenhaltungen:
- DE-A1-102012 210 664
- US-A1- 2004 080 293
- US-A1- 2008 266 918

## Beschreibung

Die Erfindung liegt auf dem Gebiet der rotierenden elektrischen Maschinen und bezieht sich auf bürstenlose Maschinen mit wenigstens drei Phasenwicklungen, die miteinander verbunden sind.

Um die bekannten Nachteile von rotierenden elektrischen Maschinen mit mechanischen Kommutatoreinrichtungen in Form von Bürsten, wie beispielsweise das entstehende Bürstenfeuer und die Abnutzungsprobleme der mechanischen Kommutatoreinrichtung mit entsprechenden Nutzleistungsverlusten zu vermeiden, wurden unter Ausnutzung der Möglichkeiten der Leistungselektronik sogenannte bürstenlose elektrische Maschinen entwickelt, deren Störungsanfälligkeit wesentlich geringer ist und deren Verschleiß im Wesentlichen durch den Lagerverschleiß bestimmt und damit sehr gering ist.

Bei einem derartigen bürstenlosen Elektroantrieb weist der Rotor üblicherweise Permanentmagnete auf, die sich in einem rotierenden Magnetfeld des mit Phasenwicklungen versehenen Stators bewegen. Die Wicklungen des Stators werden mit Leistungshalbleiterschaltern, insbesondere mit Leistungstransitoren, insbesondere MOSFET's angesteuert. Die Ansteuerung der verschiedenen Phasenwicklungen des Stators erfolgt zyklisch, wobei üblicherweise eine Pulswellenmodulation bei der Ansteuerung der einzelnen Phasenwicklungen angewendet wird, um diese mit einem genau und schnell steuerbaren Strom zu beaufschlagen.

Aus der WO2008/006745 ist eine rotierende elektrische Maschine mit mehreren Phasenwicklungen bekannt, bei der die Ansteuerung durch wechselweises Anlegen verschiedener Spannungspotentiale an die Phasenwicklungsanschlüsse geschieht, und wobei jeweils bei einer der Phasenwicklungen das Klemmenpotential zeitabschnittsweise konstant gehalten wird. Dabei können die elektrischen Potentiale an den übrigen Phasenwicklungsanschlüssen derart dynamisch gesteuert werden, dass entsprechende Stromverläufe in diesen erzeugt werden. Das Anlegen der Spannungspotentiale und die Strombeaufschlagung der übrigen Phasenwicklungen geschieht sinnvollerweise mittels pulsweitenmodulierter Signale, die zwischen einem unteren Spannungsniveau und einem oberen Spannungsniveau mit hoher Frequenz hin- und her geschaltet werden, wobei die in einer Phasenwicklung erzeugte Stromstärke beispielsweise durch das Tastverhältnis des zugeordneten pulsweitenmodulierten Signals bestimmt ist.

Da die Phasenwicklungen beispielsweise in Stern- oder Dreiecksschaltung miteinander gekoppelt sind, und die erzeugten Stromstärken im wesentlichen von den Spannungsdifferenzen zwischen den an den ersten Phasenwicklungsanschlüssen angelegten Spannungen abhängen, kann ein erster Phasenwicklungsanschluss einer ausgewählten Phasenwicklung mit einem festen Potential verbunden werden, beispielsweise mit Erdpotential oder mit dem höheren Spannungspotential eines Gleichspannungszwischenkreises, und die Differenzspannungen zwischen allen Phasenwicklungsanschlüssen können durch geeignete Berechnung und Erzeugung der Spannungen an den Anschlüssen der übrigen Phasenwicklungen vorgegeben werden. Daraus ergibt sich, dass die Speisespannung, mit der die erste, ausgewählte Phasenwicklung beaufschlagt wird, nicht zwischen den verschiedenen Niveaus hin- und hergeschaltet werden muss, so dass die durch die Schaltungen erzeugten Schaltverluste bezüglich dieser Phase entfallen. Damit werden insgesamt die Schaltverluste der Maschine verringert. Zudem ergibt sich als Folge der Verringerung der Schalthäufigkeit auch eine Verbesserung der elektromagnetischen Verträglichkeit (EMV).

Aus der US 2004/0080293 A1 ist es ein Verfahren bekannt, bei dem zeitweise eine ausgewählte Phasenwicklung mit einem konstanten elektrischen Potential verbunden ist, während die übrigen Phasenwicklungen mit pulsweitenmodulierten Signalen beaufschlagt und deren Pulse gegeneinander phasenverschoben werden.

In der US 2008/0266918 A1 ist Verfahren zur Schaltung einer Brückenschaltung einer dreiphasigen Last beschrieben, bei welchem zwischen einem ersten und zweiten Schaltverfahren ausgewählt wird. Bei dem ersten Schaltverfahren wird eine reduzierte Anzahl von Schaltkombinationen erzeugt, welche den Freilaufsteuervektoren entspricht. Bei dem zweiten Schaltverfahren werden lediglich solche Schaltkombinationen erzeugt, welche den aktiven Steuervektoren entsprechen. Das bekannte Verfahren ist hinsichtlich eines gegebenen Referenzspannungsvektor definiert. Verfahrensgemäß ist vorgesehen, dass anhand des ausgewählten Schaltverfahrens eine Sequenz von Steuervektoren aus den Schaltkombinationen erzeugt wird.

Die Erfindung hat sich vor dem Hintergrund des Standes der Technik die Aufgabe gestellt, Schaltverluste weiter zu verringern und die Belastung der Strom- und/oder Spannungsquelle ebenfalls zu optimieren.

Die Aufgabe wird bezüglich eines Verfahrens zum Betrieb einer rotierenden elektrischen Maschine mit den Merkmalen des Anspruchs 1 gelöst. Die Unteransprüche enthalten vorteilhafte Ausgestaltungen der Erfindung. Bezüglich einer Vorrichtung zur Ansteuerung einer rotierenden elektrischen Maschine wird die Aufgabe mit den Merkmalen des Patentanspruchs 4 gelöst.

Bei dem erfindungsgemäßen Verfahren ist ebenfalls zeitweise eine ausgewählte Phasenwicklung mit einem konstanten elektrischen Potential verbunden ist, während die übrigen Phasenwicklungen mit pulsweitenmodulierten Signalen beaufschlagt werden. Um Schaltverluste insgesamt möglichst gering zu halten und zudem Wechselspannungsanteile in der Stromquelle, welche die Phasenwicklungen speist, gering zu halten, ist des Weiteren vorgesehen, dass während der Zeit, in der die ausgewählte Phasenwicklung mit einem konstanten elektrischen Potential verbunden ist, die Pulse der pulsweitenmodulierten Signale, mit denen die übrigen Phasenwicklungen beaufschlagt werden, in Abhängigkeit von den Stromrichtungen in diesen übrigen Phasenwicklungen zumindest zeitweise gegeneinander phasenverschoben werden.

Durch eine wenigstens zeitweise Phasenversetzung der einzelnen Spannungsimpulse der Phasenwicklungen, die nicht mit einem festen elektrischen Potential verbunden sind - die sogenannten übrigen Phasenwicklungen - wird der Strom- und Spannungsbedarf der einzelnen zu beaufschlagenden Phasenwicklungen an der gemeinsamen Strom-/Spannungsquelle zeitlich entzerrt. Es sind im Rahmen der Taktung der Pulsweitenmodulation dann nicht zwei Phasenwicklungen gleichzeitig mit einem gleich gerichteten Strom zu beaufschlagen. Dadurch wird grundsätzlich die Spannungsquelle geschont. Durch die Festlegung der ersten Phasenwicklung auf ein festes Spannungsniveau wird die Zahl der Schaltungen insgesamt reduziert, da Spannungsimpulse nur noch an eine um eins (1) reduzierte Zahl von Phasenwicklungen zu liefern sind.

Eine vorteilhafte Ausgestaltung der Erfindung sieht vor, dass die pulsweitenmodulierten Spannungssignale, mit denen die übrigen Phasenwicklungen beaufschlagt werden, während der Zeit, für die die ausgewählte Phasenwicklung mit einem konstanten elektrischen Potential verbunden ist, dauernd gegeneinander phasenverschoben sind.

Bei dieser Ausgestaltung der Erfindung wird zumindest während der Zeiten, in denen die Ströme in den übrigen Phasenwicklungen dieselbe Richtung haben, durch den Phasenversatz der Taktung der pulsweitenmodulierten Spannungssignale die Maximalbelastung der Strom-/Spannungsquelle gesenkt und deren Strombelastung wird vergleichmäßigt, so dass auch der Wechselstromanteil sinkt. Zudem ist in den genannte Zeiträumen, in denen die Stromrichtungen in den übrigen Phasenwicklungen übereinstimmen, durch die geringere Variabilität der Stromstärke in der Strom/Spannungsquelle die Stromstärkenmessung einfacher möglich, da hierfür längere Messzeiten innerhalb der Taktzeit zur Verfügung stehen.

Eine weitere vorteilhafte Ausgestaltung der Erfindung sieht vor, dass die pulsweitenmodulierten Spannungssignale, mit denen die übrigen Phasenwicklungen während der Zeit beaufschlagt werden, für die die ausgewählte Phasenwicklung mit einem konstanten Potential verbunden ist, zeitweise gegeneinander phasenverschoben und zeitweise gegeneinander nicht phasenverschoben werden.

Diese Variante der Erfindung lässt es zu, die Spannungssignale der übrigen Phasenwicklungen nur dann gegeneinander zu verschieben, wenn die entsprechenden Ströme dieselbe Richtung haben. In Zeiträumen, in denen die Ströme durch die übrigen Phasenwicklungen entgegengesetzte Richtungen haben, kann es vorteilhaft sein, keine Phasenverschiebung zwischen den Spannungsimpulsen zuzulassen, da in diesem Fall die zu lieferenden Stromstärken voneinander zu subtrahieren sind und damit sowohl die Strombelastung der Spannungsquelle als auch deren Wechselstromanteil gering gehalten werden kann.

Es wird demnach die Stromrichtung in den einzelnen mit pulsweitenmodulierten Signalen beaufschlagten Phasenwicklungen gemessen. In Abhängigkeit von den Stromstärken und Stromrichtungen wird entschieden, ob eine Phasenverschiebung zwischen den Spannungssignalen erzeugt wird oder nicht.

Dabei kann unter der Stromrichtung die Ausrichtung des Stroms in Bezug auf einen Referenzpunkt, beispielsweise einen Sternpunkt bei Vorliegen einer Sternschaltung der elektrischen Maschine, verstanden werden. Teilströme, die auf den Sternpunkt hin gerichtet sind, weisen dann dieselbe Richtung auf, während Ströme, die vom Sternpunkt weg fließen, dem auf diesen zu fließenden Strömen entgegen gerichtet sind. Bei einer Dreieckschaltung können beispielsweise Ströme, die im Uhrzeigersinn fließen, als gleichsinnig und gleich gerichtet aufgefasst werden, während Ströme gegen den Uhrzeigersinn den Strömen im Uhrzeigersinn entgegengesetzt sind.

Die pulsweitenmodulierten Spannungssignale, mit denen die übrigen Phasenwicklungen beaufschlagt werden, werden während der Zeiträume gegeneinander phasenverschoben, in denen die Ströme, die durch die übrigen Phasenwicklungen fließen, in Bezug auf einen elektrischen Verbindungspunkt, an dem wenigstens zwei der übrigen Phasenwicklungen miteinander verbunden sind, insbesondere in Bezug auf den Sternpunkt bei einer Sternschaltung, übereinstimmende Stromrichtungen haben.

Die Stromstärke und -richtung wird in den übrigen Phasenwicklungen laufend gemessen sowie hiervon abhängig laufend oder periodisch entschieden, ob die Spannungssignale, mit denen die übrigen Phasenwicklungen beaufschlagt werden, gegeneinander phasenverschoben werden oder nicht.

Die pulsweitenmodulierten Spannungssignale, mit denen die übrigen Phasenwicklungen beaufschlagt werden, werden ausschließlich in den Zeiträumen gegeneinander phasenverschoben werden, in denen die Ströme, die durch die übrigen Phasenwicklungen fließen, in Bezug auf den Verbindungspunkt von wenigstens zwei Phasenwicklungen, insbesondere im Bezug auf den Sternpunkt bei einer Sternschaltung, dieselbe Flussrichtung haben.

In diesem Fall ist in den Zeiträumen, in denen die Stromrichtungen in den übrigen Phasenwicklungen gleich sind, die Belastung der Spannungsquelle bei relativ geringem Wechselspannungsanteil minimiert und in den Phasen, in denen die Stromstärken in den übrigen Phasenwicklungen verschieden sind, wird zumindest die Strombelastung der Spannungsquelle optimiert.

Die Phasenverschiebungen zwischen den pulsweitenmodulierten Spannungssignalen, mit denen die übrigen Phasenwicklungen beaufschlagt werden betragen 180°.

Eine weitere vorteilhafte Ausgestaltung der Erfindung sieht vor, dass aus einer oder mehreren Messungen der Stromstärke an einer die Phasenwicklungen speisenden gemeinsamen Stromquelle, insbesondere einem Gleichspannungszwischenkreises, die Momentanwerte der Stromstärken in den übrigen Phasenwicklungen und insbesondere auch in der ausgewählten Phasenwicklung bestimmt werden.

Da die pulsweitenmodulierten Signale, mit denen die übrigen Phasenwicklungen beaufschlagt werden, wegen des jeweils unterschiedlichen Strombedarfs in den einzelnen Phasenwicklungen zu unterschiedlichen Zeiten innerhalb der Taktung der Pulsweitenmodulation zu- und abgeschaltet werden, d.h. unterschiedliche Tastverhältnisse haben, kann während einer Periode der pulsweiten Modulation zu einem ersten Zeitpunkt die Strombelastung durch eine einzelne beaufschlagte Phasenwicklung gemessen werden und zu einem zweiten Zeitpunkt, wenn zwei Phasenwicklungen gleichzeitig beaufschlagt werden, kann die Summe der gelieferten Ströme gemessen werden. Aus diesen beiden Messwerten können unter Berücksichtigung der Induktivitäten, der induzierten Spannungen und der Rückwirkungen sowohl die einzelnen Stromstärken in den Phasenwicklungen als auch die Richtungen der Ströme bestimmt werden. Die Messung ist grundsätzlich bei einer Phasenverschiebung der pulsweitenmodulierten Signale der gelieferten Phasenwicklungen vereinfacht, da die Phasen konstanter Stromstärke (in denen kein PWM-Signal auf- oder abgeschaltet wird) in diesem Fall länger sind.

Eine weitere vorteilhafte Ausgestaltung der Erfindung sieht vor, dass die Momentanwerte der Stromstärken, die durch die übrigen Phasenwicklungen und insbesondere auch durch die ausgewählte Phasenwicklung fließen, geschätzt werden, insbesondere auf der Basis der Phasenspannungen.

Ist die Messung aus situationsbedingten Gründen nicht in der oben beschriebenen Weise auszuführen, so können die Stromstärken aufgrund der an die Phasenwicklungen angelegten Spannung geschätzt werden. Hierbei können je nach den zur Verfügung stehenden Ressourcen auch Induktivitäten, induzierte Spannungen und Belastungen der elektrischen Maschine berücksichtigt werden.

Die Erfindung bezieht sich außer auf ein Verfahren der oben genannten Art auch auf eine bürstenlose rotierende elektrische Maschine mit wenigstens drei Phasenwicklungen, die je einen ersten und einen zweiten Phasenwicklungsanschluss aufweisen, wobei die Phasenwicklungen miteinander verbunden sind - insbesondere jeweils mit den zweiten Phasenwicklungsanschlüssen mit einem gemeinsamen Sternpunkt verbunden sind - und mit einer Vorrichtung zur Ansteuerung, wobei die einzelnen Phasenwicklungen jeweils gesondert mit pulsweitenmodulierten Spannungssignalen beaufschlagbar sind. Eine erste Schalteinrichtung verbindet wenigstens zeitweise eine erste Phasenwicklung mit einem konstanten elektrischen Potential einer Spannungsquelle, insbesondere eines Gleichspannungszwischenkreises. Eine Einrichtung dient zur Ermittlung von Stromstärken in den übrigen Phasenwicklungen. Eine zweite Schalteinrichtung ist dazu eingerichtet, in Abhängigkeit von den Stromrichtungen in den übrigen Phasenwicklungen eine Phasenverschiebung der Pulse in diesen Phasenwicklungen gegeneinander ein- und auszuschalten.

Die Vorrichtung erlaubt die Ansteuerung einer elektrischen Maschine mit pulsweitenmodulierten Signalen nach dem oben beschriebenen Verfahren, wobei in einer Ausgestaltungsform zunächst die Phasenwicklung mit der größten Stromstärke ermittelt und üblicherweise diese Phase entweder mit einem hohen oder niedrigen Potential des pulsweitenmodulierten Spannungsverlaufs zumindest für einen Zeitraum fest verbunden wird. Dabei wird das hohe Spannungspotential oder das niedrige Spannungspotential ausgewählt je nachdem, bei welchen der genannten Potentiale ein Aufschalten von Spannungsimpulsen auf die ausgewählte Phase vermieden werden kann, und die notwendigen Ströme in dieser Phase möglichst weitgehend durch entsprechende Kombination der Spannungen der in den übrigen Phasenwicklungen erzeugt werden können.

Nachfolgend werden Ausführungsbeispiele der Erfindung anhand einer Zeichnung näher erläutert. Darin zeigen:
- Fig. 1: schematisch die Phasenwicklungen einer dreiphasigen elektrischen Maschine in Sternschaltung,
- Fig. 2: eine Brückenschaltung zur Ansteuerung jeweils einer Phasenwicklung eines Elektromotors,
- Fig. 3: ein Ersatzschaltbild für eine Spannungsversorgung einer Phase,
- Fig. 4: eine schematische Darstellung einer elektrischen Maschine mit einer Dreieckschaltung von drei Phasenwicklungen,
- Fig. 5: eine schematische Darstellung einer Vorrichtung zur Ansteuerung einer elektrischen Maschine am Beispiel einer Maschine mit Sternschaltung,
- Fig. 6: ein erstes Diagramm der pulsweitenmodulierten Signale von drei Phasen, die mit derselben Frequenz und phasengleich zueinander getaktet sind,
- Fig. 7: ein zweites Diagramm der pulsweitenmodulierten Signale von drei Phasen, wobei die Phasenwicklung U auf konstantes Potential gelegt ist,
- Fig. 8: ein drittes Diagramm der pulsweitenmodulierten Signale von drei Phasen, wobei die Phasenwicklung W auf konstantes hohes Potential gelegt ist, während die Phasenwicklungen U und V mit phasengleichen Signalen beaufschlagt sind,
- Fig. 9: ein viertes Diagramm der pulsweitenmodulierten Signale von drei Phasen, wobei die Phasenwicklung U auf konstantes Potential gelegt ist, während die Phasenwicklungen V und W mit gegeneinander phasenverschobenen Signalen beaufschlagt sind, sowie
- Fig. 10: ein fünftes Diagramm der pulsweitenmodulierten Signale von drei Phasen, wobei die Phasenwicklung W auf konstantes hohes Potential gelegt und die Phasenwicklungen U und V mit gegeneinander phasenverschobenen Signalen beaufschlagt sind.

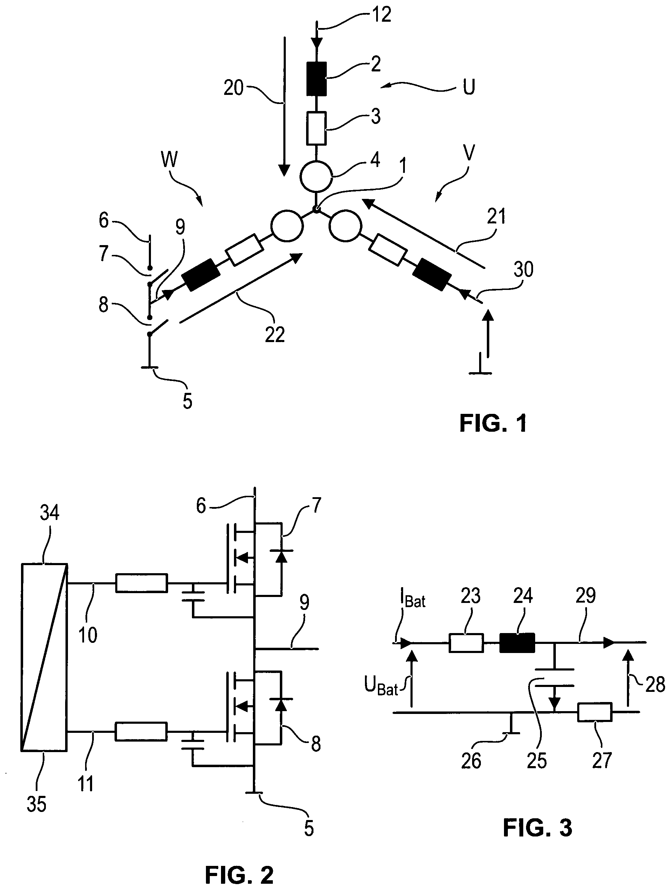

Fig. 1 zeigt schematisch eine Sternschaltung von drei Phasenwicklungen U, V, W, wobei der Sternpunkt 1 den Verbindungsanschluss der Phasenwicklungen U, V, W bildet, an dem deren jeweils zweite Phasenwicklungsanschlüsse miteinander verbunden sind. Die einzelnen Phasenwicklungen sind in Form eines Ersatzschaltbildes mit jeweils einer Induktivität 2 und einem ohmschen Widerstand 3 sowie einem Spannungsabfall gezeigt, der - anhand des Kreises 4 repräsentiert - mittels einer aufgrund der Bewegung induzierten Spannung (EMK, EMF) erzeugt wird. Die jeweils über einer Phasenwicklung U, V, W abfallende Spannung ist durch die Pfeile 20, 21 bzw. 22 repräsentiert und ergibt sich jeweils als Summe der Spannungsabfälle über der Induktivität und dem ohmschen Widerstand sowie der induzierten Spannung.

Die Ansteuerung eines derartigen, in Sternschaltung betriebenen bürstenlosen Elektroantriebs kann beispielsweise mittels einer sogenannten B6-Schaltung, einer typischen Halbleiter-Brückenschaltung, erfolgen, bei der an jede der Phasenwicklungen in hoher Frequenz getaktet wahlweise ein höheres Gleichspannungsniveau oder ein niedrigeres Gleichspannungsniveau, insbesondere Erdpotential, angelegt werden kann. Damit ist ein solcher Elektroantrieb bezüglich der Drehzahl, der Leistung und der Drehrichtung steuerbar.

Beispielhaft ist eine Anordnung aus zwei Schaltern für die Phase W in der Fig. 1 schematisch dargestellt, wobei mit 5 der Erdpotentialanschluss und mit 6 ein höheres Gleichspannungspotential bezeichnet ist. Über die Schalter 7, 8 kann der erste Anschluss 9 der Phasenwicklung W entweder mit dem höheren Gleichspannungspotential oder mit Erdpotential verbunden werden. Wird der Schalter 7 geschlossen und der Schalter 8 geöffnet, so ist der Anschluss 9 mit dem höheren Spannungspotential verbunden. Ist der Anschluss 7 geöffnet und der Anschluss 8 geschlossen, so wird der erste Anschluss 9 der Phasenwicklung W mit dem Erdpotential verbunden. Jeder der ersten Phasenwicklungsanschlüsse 9, 12, 30 ist mit einer derartigen Schalteranordnung verbunden. Je nach der Schaltstellung der einzelnen Schalter 7, 8 kann somit jede Phasenwicklung U, V, W mit zwei verschiedenen Spannungsniveaus beaufschlagt werden.

Fig. 2 stellt detaillierter eine mögliche Konstruktion einer Schaltung mit einer Konstellation aus zwei Halbleiterschaltern 7, 8 analog den Bezeichnungen aus der Fig. 1 dar, über die gezielt zwei verschiedene Spannungspotentiale an eine Phasenwicklung U, V, W angeschlossen werden können. Der erste Phasenwicklungsanschluss ist mit 9 bezeichnet. Ein niedriges Spannungsniveau, beispielsweise das Erdpotential, ist mit dem Erdpotentialanschluss 5 bezeichnet, während das höhere Gleichspannungspotential an dem Anschluss 6 anliegt. Die Schalter 7, 8 sind als MOSFET's realisiert, die jeweils Durchschalten oder Sperren können und die durch eine Steuerspannung bzgl. deren Schaltzustandes ansteuerbar sind. Die Steuerspannungseingänge sind in Fig. 2 mit 10 bzw. 11 bezeichnet. Durch entsprechende Ansteuerung der Steuerspannungseingänge 10, 11 kann somit an eine Phasenwicklung U, V, W einer Schaltung, beispielsweise einer Sternschaltung eines Elektroantriebs, wahlweise ein Gleichspannungspotential eines höheren Spannungsniveaus oder eines geringeren Spannungsniveaus oder Erdpotentials angelegt werden.

Die Steuerspannungseingänge 10,11 werden von einer ersten Schalteinrichtung 34 sowie von einer zweiten Schalteinrichtung 35 angesteuert, wobei die erste Schalteinrichtung 34 den Anfang und das Ende des Spannungsimpulses bzw. die Impulsdauer oder das Tastverhältnis festlegt, während die zweite Schalteinrichtung 35 bedarfsweise zwischen einer Phasenverschiebung von Null und einer festgelegten Phasenverschiebung, beispielsweise von 180 Grad, umschalten kann.

Fig. 3 zeigt ein Ersatzschaltbild für eine Spannungsquelle, die beispielsweise das höhere Spannungsniveau am Anschluss 6 in Fig. 2 gegenüber Erdpotential liefern kann. Dabei bezeichnet 23 den Innenwiderstand der Spannungsquelle, 24 die Eigeninduktivität, 25 die Kapazität, 26 den Erdpotentialanschluss, 27 einen Shunt (Messwiderstand), an dem die Nutzspannung abfällt sowie 28 die gelieferte Nutzspannung und 29 den gelieferten Strom. Strom und Spannung werden (auf der linken Seite der Schaltung) beispielhaft von einer Batterie oder von einem Gleichspannungs-Zwischenkreis eines Stromrichters geliefert.

Üblicherweise weist eine Ansteuerschaltung für eine Sternschaltung gemäß Fig. 1 jeweils Halbleiterschalterbrücken für jede Phasenwicklung auf, wie beispielsweise in Fig. 2 dargestellt.

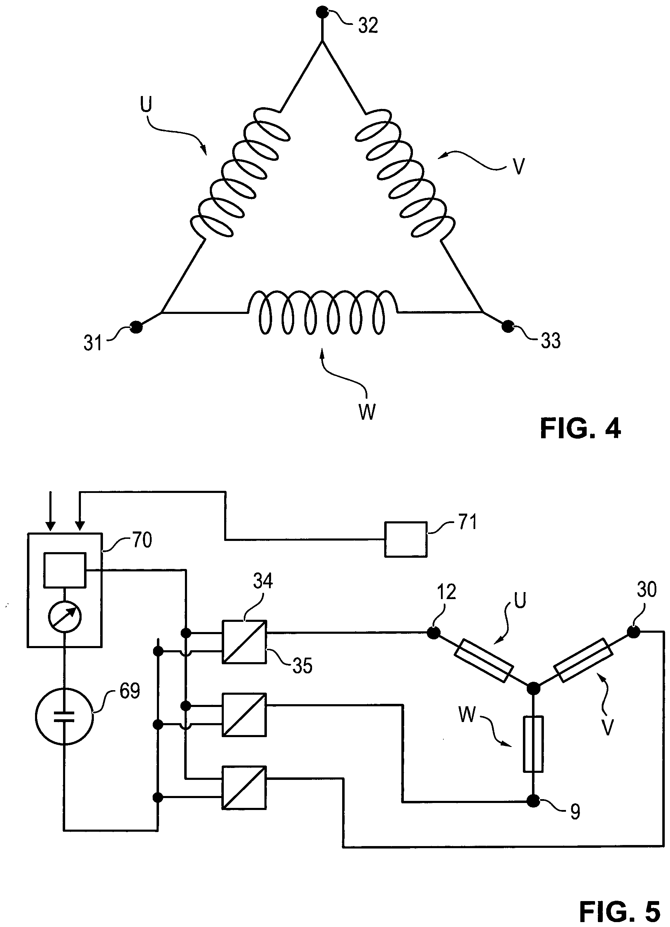

Analoges gilt für eine in Fig. 4 schematisch dargestellte Dreiecksschaltung, die ebenfalls als typische Schaltung eines Elektroantriebes dienen kann mit entsprechend in bekannter Weise gegenüber einer Sternschaltung verschiedener Antriebscharakteristik. Für die einzelnen Phasenwicklungen der Phasen U, V, W gilt das oben im Zusammenhang mit Fig. 1 Beschriebene. Auch die Ansteuerung kann ähnlich einer Sternschaltung bzgl. der Hardware realisiert sein, wobei Regelungsmechanismen der Ansteuerung verschieden sein können.

Das erfindungsgemäße Verfahren kann auch bei einer Dreieckschaltung - wie in der Fig. 4 dargestellt - angewendet werden, indem zwei der drei Phasenwicklungen U, V, W über die Phasenwicklungsanschlüsse 31, 32, 33 dynamisch angesteuert werden, während ein einzelner ausgewählter Phasenwicklungsanschluss 31, 32, 33 auf ein festes Spannungsniveau gelegt wird.

Fig. 5 zeigt eine Ansteuerschaltung, bei der eine Spannungs-/Stromquelle 69 in Form eines Gleichspannungs-Zwischenkreises eine Gleichspannung an zwei Anschlüssen liefert. Die ersten und zweiten Schalteinrichtungen 34, 35 sind mit einem Anschluss der Spannungs-/Stromquelle direkt und mit einem zweiten Anschluss über eine Einrichtung 70 verbunden, in der die Stromstärke der Strom-/Spannungsquelle zu verschiedenen Zeitpunkten gemessen und hieraus Momentanstromstärken in den Phasenwicklungen bestimmt werden. Zudem werden der Einrichtung Sollwerte für den Betrieb der elektrischen Maschine und insbesondere auch Messwerte eines Positionssensors 71 der elektrischen Maschine zugeführt. Die Pulsweitenmodulationssignale und die wahlweise festen Spannungswerte können für die einzelnen Phasenwicklungsanschlüsse 9, 12, 30 in drei einzelnen Vorrichtungen erzeugt werden, welche jeweils eine erste und eine zweite Schalteinrichtung 34, 35 beinhalten. Es kann jedoch auch eine zentrale Vorrichtung mit erster und zweiter Schalteinrichtung zur abgestimmten Ansteuerung der drei Phasenwicklungen vorgesehen sein.

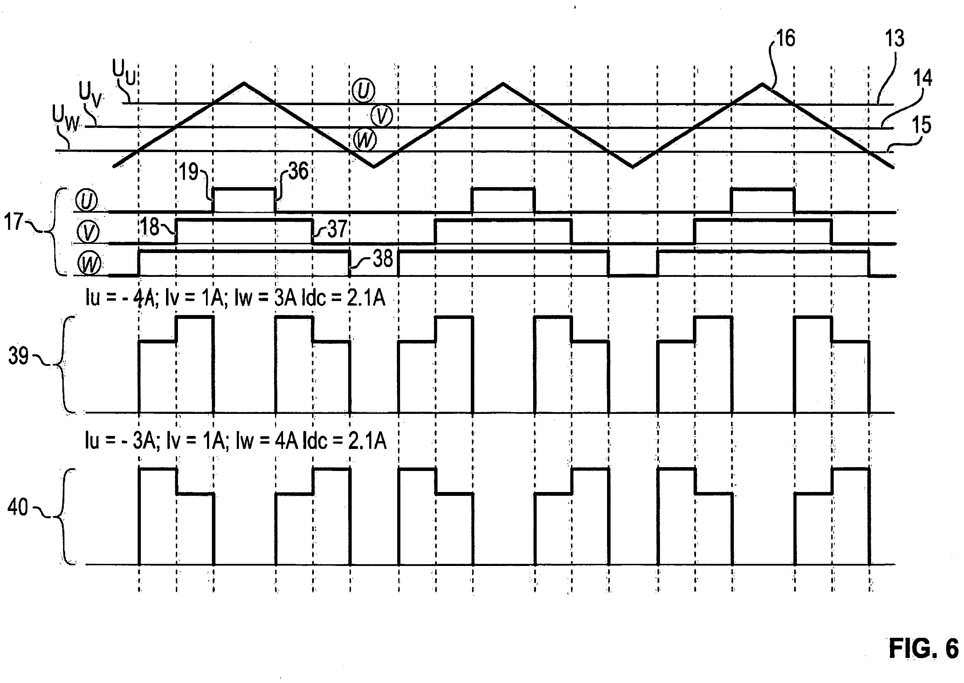

Anhand der im Folgenden beschriebenen Figuren 6 bis 10 soll im Einzelnen der Signalverlauf an den einzelnen Phasenwicklungsanschlüssen gezeigt und erläutert werden, wie die Spannungssignale an den einzelnen Phasenwicklungen vorteilhaft gesteuert beziehungsweise geregelt werden können und welche Konsequenzen bezüglich der Ströme in den Phasenwicklungen und des Speisestroms der externen Strom-/Spannungsquelle sich hieraus ergeben.

Die Diagramme bestehen jeweils aus vier horizontalen, übereinanderliegenden Abschnitten. Horizontal, auf der X-Achse, ist dabei jeweils die Zeit aufgetragen, wobei jeweils insgesamt drei Perioden der Pulsweitenmodulation (beispielhaft kann eine Periode etwa 20 Mikrosekunden betragen) dargestellt sind. Dabei wird innerhalb einer Schaltperiode üblicherweise durch ein Halbleiterschaltelement, also typischerweise durch einen MOSFET, einen Thyristor oder einen IGBT, die Spannung an jedem Phasenwicklungsanschluss einmal eingeschaltet und wieder ausgeschaltet. Jeder dieser Schaltvorgänge verursacht naturgemäß Schaltverluste und EMV-Störungen (EMV = elektromagnetische Verträglichkeit). Die Tastverhältnisse der einzelnen Phasen, d.h. der Zeitanteil der Periode, über den die Spannung an den jeweiligen Phasenanschluss eingeschaltet werden soll, wird aufgrund von Messungen der Ist-Stromstärke in den einzelnen Phasenwicklungen bestimmt. Dabei ist bei einem Elektromotor unter anderem die aktuelle Last, die Ist-Drehzahl und die Solldrehzahl zu berücksichtigen.

In dem Diagramm der Figur 6 ist ein übliches Ansteuerverfahren dargestellt, bei dem die ersten Phasenwicklungsanschlüsse aller drei Phasenwicklungen eines Elektromotors jeweils mit einem pulsweitenmodulierten Signal angesteuert werden. Die momentanen Sollspannungen der drei Phasen sind in der Figur mit einem Momentanwert als horizontale Linien 13 (Spannungssollwert U_{U}), 14 (Spannungssollwert U_{V}) und 15 (Spannungssollwert U_{W}) angegeben. Dabei ist vorausgesetzt, dass die Sollspannungswerte über die Zeit in Abhängigkeit von der Drehzahl des Motors nach je einer Sinusfunktion variieren. Dies führt dazu, dass die drei eingezeichneten Linien 13, 14, 15 sich periodisch in senkrechter Richtung, d.h. in Richtung der X-Achse auf und ab bewegen.

Die sägezahnförmige Linie 16 repräsentiert einen periodisch linear ansteigenden und abfallenden Zählerstand eines in einem Microcontroller realisierten Zählers. Die Schnittpunkte zwischen den für einen bestimmten Zeitpunkt fest liegenden Schwellen der einzelnen Phasen, repräsentiert durch die horizontalen Linien 13, 14, 15 mit der sägezahnförmigen Linie 16 repräsentieren die Ein- und Ausschaltzeitpunkte für die Spannungsimpulse, mit denen die einzelnen Phasen beaufschlagt werden. Ist demnach eine Spannungsschwelle besonders hoch, so wird die entsprechende horizontale Linie niedrig liegen, so dass die Tastzeit des Spannungsimpulses und das Tastverhältnis des pulsweitenmodulierten Signals groß sind, und die entsprechende Phasenwicklung relativ lange (im Vergleich zu den übrigen Phasenwicklungen) mit einer Spannung beaufschlagt wird.

Im von oben gesehen zweiten horizontalen Abschnitt des Diagramms der Figur 6, der mit 17 bezeichnet ist, ist der Spannungsverlauf an den ersten Anschlüssen der jeweiligen Phasenwicklungen zeitaufgelöst dargestellt. Es ergibt sich dort, dass mit dem Fortschreiten der Zeit zuerst die Phasenwicklung W mit einer Spannung beaufschlagt wird, dass danach, zum Zeitpunkt 18, die Phasenwicklung V mit einem Spannungssignal beaufschlagt wird, und dass darauffolgend zum Zeitpunkt 19 die Phasenwicklung U mit einem Spannungssignal beaufschlagt wird. Zu den Zeitpunkten 36,37,38 werden die entsprechenden Spannungssignale der Phasenwicklungen U,V,W nacheinander wieder abgeschaltet. Danach wird dieser Spannungsverlauf für die drei Phasen periodisch wiederholt.

Im dritten Abschnitt 39 des Diagramms der Figur 6 ist der resultierenden Strom in der gemeinsamen Spannungsquelle, also beispielsweise im Gleichspannungszwischenkreis, in seinem zeitlichen Verlauf dargestellt, und zwar in der Situation, in der in der Phasenwicklung U der Strombetrag vier Ampere (4A), in der Phasenwicklung V der Strombetrag ein Ampere (1A) und in der Phasenwicklung W der Strombetrag drei Ampere (3A) ist, wobei bezogen auf die Richtungen vom und zum Sternpunkt (entweder zum Sternpunkt hin positiv und vom Sternpunkt weg negativ gerechnet oder umgekehrt) die Stromrichtung in den Phasenwicklungen V und W gleich sind, während die Stromrichtung in der Phase U den ersten beiden entgegensetzt ist.

Es ergibt sich in dem Gleichspannungszwischenkreis zunächst im ersten Schaltzeitraum vor dem Zeitpunkt 18 lediglich ein Strom durch die Phasenwicklung W in Höhe von 3A, zu dem sich ab dem Zeitpunkt 18 ein zusätzlicher Strom von 1A durch die Phasenwicklung V hinzu addiert. Zum Zeitpunkt 19 wird dann zusätzlich der Strom durch die Phasenwicklung U durch ein Anlegen eines entsprechenden Spannungspotentials an der Phasenwicklung auf "high" hinzugefügt, wobei die Stromrichtung des Stroms durch die Phasenwicklung U den übrigen beiden Strömen entgegengesetzt und gleichgroß ist, so dass im Zeitbereich zwischen dem Zeitpunkt 19 und dem Zeitpunkt 36 der Gesamtstrom im Gleichstrom-Zwischenkreis gleich 0 ist.

Nach dem Zeitpunkt 36 wird der Strom durch die Phasenwicklung U wieder ausgeschaltet, so dass ein Gesamtstrom in Höhe von 4A in Summe durch die Phasenwicklungen V und W verbleibt, der sich zum Zeitpunkt 37 weiter um 1A reduziert, worauf dann bis zum Zeitpunkt 38 nur noch der Strom in Höhe von 3A durch die Phasenwicklung W verbleibt.

Insgesamt ergibt sich eine hohe Zahl von Schaltvorgängen pro Periode der pulsweitenmodulierten Signale sowie durch die stark variierenden Stromstärken im Gleichspannungszwischenkreis ein hoher Wechselstromanteil im Zwischenkreiskondensator.

Im vierten Abschnitt 40 des Diagramms der Figur 6 ist die Situation dargestellt, in der die Stromrichtungen in den Phasenwicklungen V und W einander entgegengesetzt sind, und die Stromrichtung in der Phase U die gleiche Richtung hat wie in der Phase V. Auch hier ergibt sich eine hohe Zahl von Schaltvorgängen mit einem ähnlich hohen Wechselstromanteil.

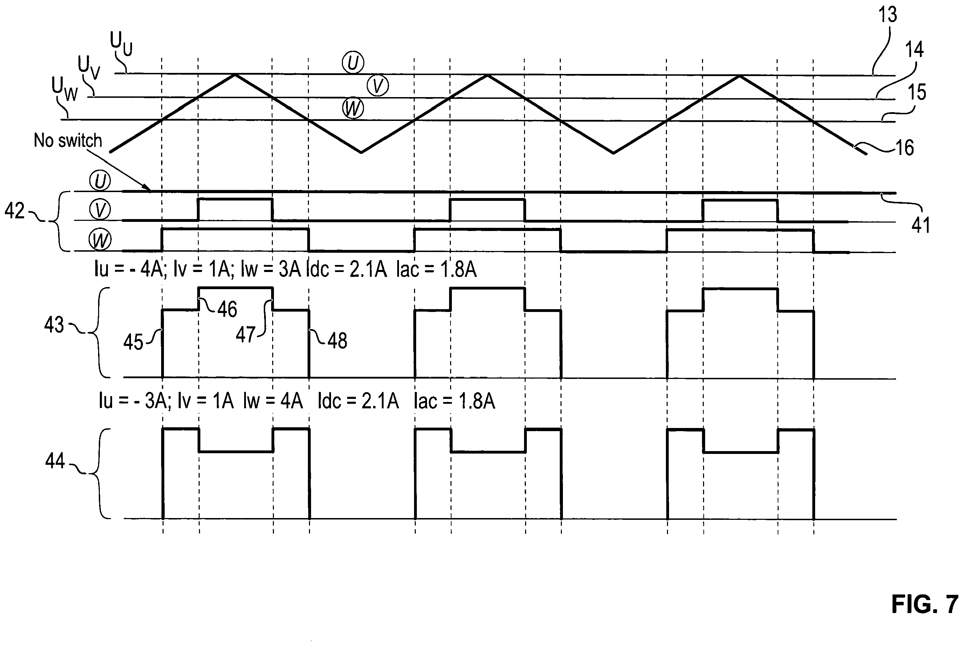

In der Figur 7 ist ein Ansteuerverfahren gemäß dem zitierten Stand der Technik (WO 2008/006754 A2) dargestellt, bei dem eine Phasenwicklung, nämlich die Phasenwicklung der Phase U dauerhaft an das obere Niveau der Spannung des Gleichspannungszwischenkreises angeschlossen ist. Dies ist durch die entsprechende Platzierung der horizontalen Linie 13 an der oberen Spitze der Sägezahnkurve 16 im obersten Abschnitt des Diagramms der Figur 7 repräsentiert. Konsequenterweise ergibt sich im zweiten Abschnitt von oben 42 des Diagramms der Figur 7 ein konstanter Verlauf der Spannung an der Phase U, der durch die horizontale Linie 41 repräsentiert ist. Nur die übrigen Phasen V und W werden von der Ansteuerschaltung mit Spannungsimpulsen beaufschlagt, wobei sich die einzuregelnden Ströme durch die einzelnen Phasenwicklungen U, V, W durch die Differenzspannungen einstellen lassen. Zumindest kann abhängig von der Regelaufgabe jeweils eine Phase ermittelt werden, die an ein konstantes Spannungsniveau, entweder an das obere Spannungsniveau des Gleitspannungszwischenkreises der Spannungsquelle oder an das untere Niveau dieser Spannung, angelegt werden kann, wobei durch entsprechende Auswahl der an die übrigen Phasenwicklungen angelegten Spannungsniveaus die erforderlichen Differenzspannungen zur Erzeugung der Zielströme angelegt werden können.

Entsprechend ist im zweiten Abschnitt 42 des Diagramms der Figur 7 der Spannungsverlauf an den Phasenwicklungen V und W dargestellt. Im dritten Abschnitt 43 des Diagramms der Figur 7 ist der Stromverlauf im Spannungszwischenkreis dargestellt unter der Voraussetzung, dass die Stromstärken in den signalbeaufschlagten Phasenwicklungen V und W bei gleicher Richtung dieser Ströme 1A bzw. 3A betragen. Es ergibt sich zunächst zum Zeitpunkt 45 ein Stromanstieg auf 3A durch Schalten der entsprechenden Halbleiterbrücke und Beaufschlagung der Phasenwicklung W mit einem Strom. Zum Zeitpunkt 36 ergibt sich ein Erhöhung auf insgesamt 4A, zum Zeitpunkt 47 eine Verringerung auf 3A und zum Zeitpunkt 48 durch Abschalten des Spannungssignals an der Phasenwicklung W ein Gesamtstrom von Null (0A). Insgesamt ergeben sich immer noch relativ viele Schaltvorgänge mit großen Stromstärkesprüngen.

Bei der Variante, die im vierten Abschnitt 44 des Diagramm dargestellt ist, sind die Ströme in den Phasen V und W entgegengesetzt gerichtet. Es ergibt sich zunächst zum Zeitpunkt 45 ein Strom von 4A, der bis zum Zeitpunkt 46 auf 3A reduziert, zum Zeitpunkt 47 wieder auf 4A erhöht wird und zum Zeitpunkt 38 auf 0 Ampere abfällt.

Insgesamt ergeben sich durch diese Variante weniger Schaltvorgänge als bei Ansteuerung aller Phasenwicklungen einzeln und auch längere Zeiträume, über die jeweils ein Gesamtstrom in der Spannungsquelle konstant ist, so dass auch die Strommessung leichter fällt. Die Zahl der Schaltvorgänge wird jedoch insgesamt nicht in dem wünschenswerten Maß reduziert und auch der Wechselstromanteil, den die Stromquelle und damit der Zwischenkreiskondensator liefern muss, ist unangenehm hoch. Der Zwischenkreiskondensator wird damit mehr als wünschenswert belastet.

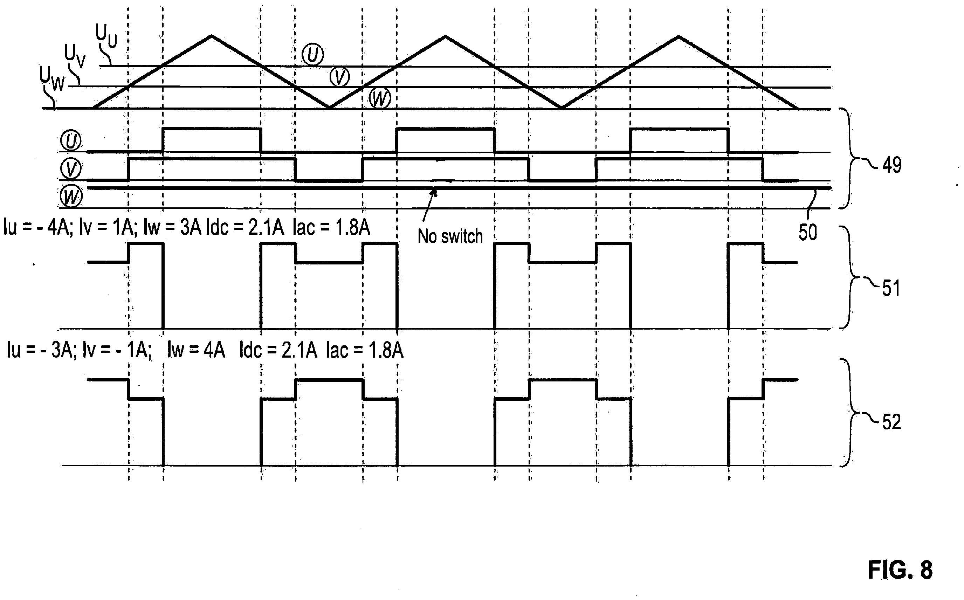

In der Figur 8 ist ebenso wie in der Figur 7 eine Fallgestaltung dargestellt, bei der eine der Phasenwicklungen an ein konstantes Potential angeschlossen ist, in diesem Fall der erste Phasenwicklungsanschluss der Phasenwicklung W. Dies ist aus dem zweiten Abschnitt 49 des Diagramms aus Figur 8 deutlich, in dem die horizontale Linie 50 den Spannungsverlauf am Anschluss der Phasenwicklung W darstellt. An den übrigen Phasenwicklungen U, V werden pulsweitenmodulierte Signale angelegt, wobei im dritten Abschnitt 51 des Diagramms aus Figur 8 die Situation dargestellt ist, dass die Ströme in den Phasenwicklungen U und V in Bezug auf die Richtungen vom und zum Sternpunkt unterschiedliche Stromrichtungen aufweisen, während die Ströme in den genannten Phasenwicklungen gemäß der im vierten Abschnitt 53 gezeigten Situation dieselbe Richtung aufweisen.

Ebenso wie bei den im Diagramm der Figur 7 gezeigten Fällen ergibt sich eine Verringerung der Anzahl von Schaltungen, wobei der Wechselstromanteil in der Stromquelle, also insbesondere einem Kondensator des Gleitspannungszwischenkreises, unerwünscht hoch ist.

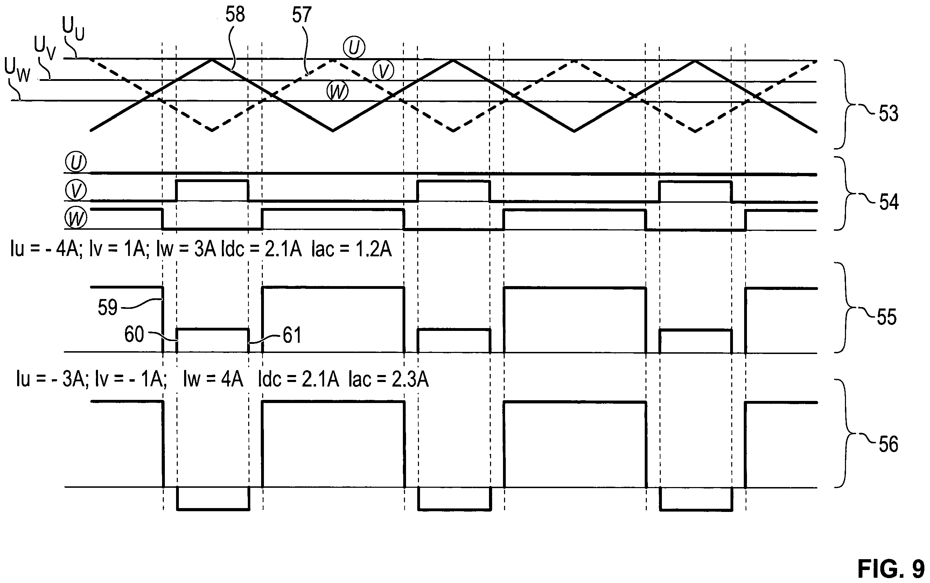

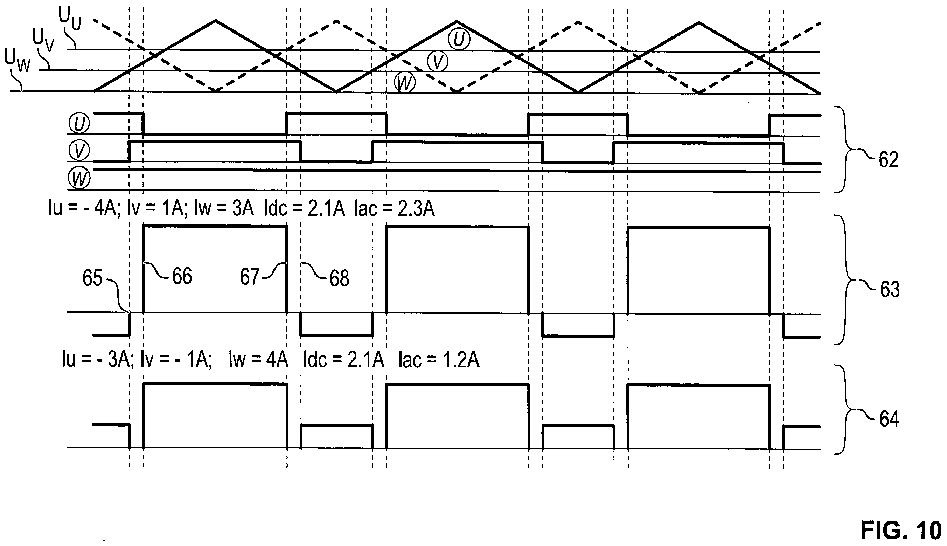

In den Figuren 9 und 10 sind nun Varianten der Erfindung dargestellt, die es erlauben sowohl die Anzahl der Schaltvorgänge als auch den Wechselstromanteil im Gleichspannungszwischenkreis zu verringern, und die zudem bewirken, dass mehr Zeit als in den oben dargestellten Fällen für die jeweiligen, innerhalb einer Pulsperiode des pulsweitenmodulierten Signals mehrfach auszuführenden Strommessungen zur Verfügung steht.

Die Figur 9 zeigt hierzu ein Diagramm, in dessen erstem Abschnitt 53 gezeigt wird, dass die ausgewählte Phasenwicklung U auf einem konstanten, niedrigen Spannungsniveau liegt, während die übrigen Phasenwicklungen V, W mit pulsweitenmodulierten Spannungsimpulsen beaufschlagt werden. Der zweite Abschnitt 54 des Diagramms aus Figur 9 zeigt, dass das periodische Spannungssignal, das an der Phasenwicklung W anliegt, gegenüber dem Spannungssignal an der Phase V um 180° phasenverschoben ist. Die Spannungsimpulse, die an die Phasenwicklung W angelegt werden, orientieren sich an der gestrichelten sägezahnförmigen Linie 57 im ersten Abschnitt 53 des Diagramms während die Spannungsimpulse, die an die Phase V angelegt werden sich an der um 180° gegen die Linie 57 phasenverschobenen, durchgezogen sägezahnförmigen Linie 58 des ersten Abschnitts 53 orientieren.

Im dritten Abschnitt 55 des Diagramms aus Figur 9 ist die Situation dargestellt, in der die Stromrichtungen in den Phasen V und W übereinstimmen. Die Stromstärke in der Phase V beträgt 1A, und in der Phase W beträgt die Stromstärke 3A. Die Stromstärke in der Phasenwicklung U beträgt -4A und die Richtung des Stroms in dieser Phase ist den Stromrichtungen in den Phasen V und W entgegengesetzt. Im dritten Abschnitt 55 zeigt sich, dass im Zeitabschnitt bis zum Zeitpunkt 59 von der Stromquelle Ströme für die Phasen U und W vom Gleichspannungszwischenkreis geliefert werden müssen, während von Zeitpunkt 60 bis zum Zeitpunkt 61 die Ströme für die Phasen U und V geliefert werden müssen. Durch die Phasenverschiebung zwischen den Spannungsimpulsen für die Phasenwicklungen V und W sind die Stromsprünge im Gleichspannungszwischenkreis bzw. die Sprünge der Strombelastungen für den Kondensator im Zwischenkreis verringert worden.

Im vierten Abschnitt 56 des Diagramms aus Figur 9 wird deutlich, dass eine derartige Phasenverschiebung zwischen den Pulsen, mit denen die Phasenwicklungen V und W beaufschlagt werden, in dem Fall, dass die Stromrichtungen in diesen Phasenwicklungen im Bezug auf den Sternpunkt verschieden sind, zu einem anderen und weniger erwünschten Effekt führen. Dies zeigt sich beim Stromverlauf im Zwischenkreis, der zwischen den Zeitpunkten 59, 60 und nach dem Zeitpunkt 61 größere Sprünge macht dadurch, dass die Stromstärke in der Phase V mit einer Stromrichtung verbunden ist, die der Stromrichtung in der Phase W entgegengesetzt ist.

Hieraus ergibt sich, dass, wenn der Wechselstromanteil in der Stromquelle der Ansteuereinrichtung minimiert werden soll, eine Phasenverschiebung zwischen den pulsweitenmodulierten Signalen der zwei signalbeaufschlagten Phasen nur dann sinnvoll ist, wenn deren Stromrichtung im Bezug auf den Sternpunkt übereinstimmt. Dies ist dann der Fall, wenn die ausgewählte Phase, die mit einem festen Potential verbunden wird, zuverlässig und möglichst über einen vorhersagbaren Zeitraum eine größere Stromstärke vom Betrag her aufweist als jede der übrigen beiden Phasenwicklungen. Diese Eigenschaft kann bei der Ansteuerung einer elektrischen Maschine aus dem Belastungszustand und den Steuergrößen, die unter anderem von der Solldrehzahl und der Ist-Drehzahl sowie den Induktivitäten und induzierten Spannungen abhängen, bestimmt werden. Entsprechende Momentanstromstärken können durch mehrfache Messungen im Gleichspannungszwischenkreis ermittelt werden, wobei bekannt ist, dass zu einem ersten Zeitpunkt nur der Strom durch eine der Phasen gemessen wird während zu einem zweiten Zeitpunkt der Summenstrom durch mehrere Phasenwicklungen gemessen wird.

Sind die Momentanstromstärken durch Messungen nicht zuverlässig zu ermitteln, so können sie aufgrund der angelegten Klemmenspannungen geschätzt oder schätzungsweise berechnet werden.

Gemäß dem Diagramm in der Figur 10 wird (vgl. dort 2. Abschnitt 62) der erste Phasenanschluss der ausgewählten Phase W auf das obere Potentialniveau des Gleichspannungszwischenkreises gelegt, während die übrigen Phasenwicklungen U, V mit pulsweitenmodulierten Spannungsimpulsen beaufschlagt werden, welche um 180° gegeneinander phasenverschoben sind. Im dritten Abschnitt 63 des Diagramms zeigt sich, dass bei einer Stromstärke vom 3A in der Phase W, einer Stromstärke von 1A in der Phase V und einer Stromstärke von -4A in der Phase U, d.h. auch bei unterschiedlichen Stromrichtungen in den impulsbeaufschlagten Phasen zwar die Zahl der Schaltvorgänge reduziert ist und auch die Zeiträume, in denen jeweils eine konstante Stromstärke im Zwischenkreis vorliegt, angenehm groß ist, so dass die Messung der Stromstärke erleichtert ist. Andererseits jedoch sind die Veränderungen der Gesamtstromstärke im Zwischenkreis dadurch ungünstig groß, dass die Stromstärke bis zum Zeitpunkt 65 als Summe des Stroms der Phasen U und W -1A beträgt, zwischen den Zeitpunkten 65 und 66 Null Ampere beträgt und zwischen dem Zeitpunkt 66 und dem Zeitpunkt 67 als Summe der Ströme in den Phasen V und W 4A beträgt, um zum Zeitpunkt 67 wieder auf 0 Ampere und zum Zeitpunkt 68 auf -1A abzufallen. Bei dieser Konstellation ist der Wechselstromanteil bei der Belastung des Gleichstromzwischenkreises unangenehm hoch, so dass in dieser Situation eine Phasenverschiebung zwischen den Impulsen, mit denen die Phasen U und V beaufschlagt werden, besser unterbleibt.

Im vierten Abschnitt 64 desselben Diagramms ist die Situation gezeigt für den Fall, dass der Strom in der Phase W 4A beträgt, während die Ströme in den übrigen Phasen U und V -3A,-1A betragen, und entsprechend auch dieselbe Stromrichtung aufweisen. Konsequenterweise sind nicht nur negative Ströme und Vorzeichenwechsel des Stroms vermieden, sondern auch die absoluten Stromschwankungen sind wesentlich geringer als in der im dritten Abschnitt 63 gezeigten Variante. In diesem Fall, der im Abschnitt 64 gezeigt ist, ist eine Phasenverschiebung zwischen den übrigen Phasen U, V somit sehr sinnvoll und schont den Kondensator im Gleichspannungszwischenkreis. Die Anzahl der Schaltvorgänge ist minimiert und es stehen relativ lange Zeiten ohne Änderung der Stromstärke in der Strom-/Spannungsquelle zur Verfügung, in denen die Gesamtstromstärke gemessen werden kann.

### Bezugszeichenliste

- 1: Sternpunkt
- 2: Induktivität
- 3: ohmscher Widerstand
- 4: induzierte Spannung
- 5: Erdpotentialanschluss
- 6: oberes Gleichspannungspotential
- 7: Schalter
- 8: Schalter
- 9: erster Phasenwicklungsanschluss der Phasenwicklung W
- 10, 11: Steuerspannungseingänge
- 12,: erster Phasenwicklungsanschluss der Phasenwicklung U
- 13: Spannungssollwert Uu
- 14: Spannungssollwert Uv
- 15: Spannungssollwert Uw
- 16: sägezahnförmige Linie, Zählerwert eines digitalen Zählers
- 17: zweiter Abschnitt des Diagramms aus Fig. 6
- 18: Zeitpunkt im Diagramm der Fig. 6
- 19: Zeitpunkt im Diagramm der Fig. 6
- 20, 21, 22: über Phasenwicklung abfallende Spannungen
- 23: Innenwiderstand der Spannungsquelle
- 24: Eigeninduktivität der Spannungsquelle
- 25: Kapazität der Spannungsquelle
- 26: Erdpotentialanschluss der Spannungsquelle
- 27: Shuntwiderstand der Spannungsquelle
- 28: Nutzspannung der Spannungsquelle
- 29: Strom der Spannungsquelle
- 30: erster Phasenwicklungsanschluss der Phasenwicklung V
- 31, 32, 33: Phasenwicklungsanschlüsse bei Dreieckschaltung
- 34: erste Schalteinrichtung
- 35: zweite Schalteinrichtung
- 36, 37, 38: Zeitpunkte im Diagramm der Fig. 6
- 39: dritter Abschnitt des Diagramms der Fig. 6
- 40: vierter Abschnitt des Diagramms der Fig. 6
- 41: horizontale Linie, konstanter Spannungsverlauf
- 42: zweiter Abschnitt des Diagramms aus Fig. 7
- 43: dritter Abschnitt des Diagramms aus Fig. 7
- 44: vierter Abschnitt des Diagramms aus Fig. 7
- 45, 46, 47, 48: Zeitpunkte im Diagramm aus Fig. 7
- 49: zweiter Abschnitt des Diagramms aus Fig. 8
- 50: horizontale Linie, Spannungsverlauf
- 51: dritter Abschnitt des Diagramms aus Fig. 8
- 52: vierter Abschnitt des Diagramms aus Fig. 8
- 53: erster Abschnitt des Diagramms aus Fig. 9
- 54: zweiter Abschnitt des Diagramms aus Fig. 9
- 55: dritter Abschnitt des Diagramms aus Fig. 9
- 56: vierter Abschnitt des Diagramms aus Fig. 9
- 57: sägezahnförmige Linie, gestrichelt
- 58: sägezahnförmige Linie
- 59, 60, 61: Zeitpunkte im Diagramm der Fig. 9
- 62: Zweiter Abschnitt de Diagramms in Fig.10
- 63: dritter Abschnitt de Diagramms in Fig.10
- 64: vierter Abschnitt de Diagramms in Fig.10
- 65, 66, 67, 68: Zeitpunkte im Diagramm der Fig. 10
- 69: Strom/spannungsquelle
- 70: Einrichtung
- 71: Positionssensor
- U, V, W: Phasenwicklungen

## Patentansprüche

1. Verfahren zum Betrieb einer bürstenlosen rotierenden elektrischen Maschine mit wenigstens drei Phasenwicklungen (U,V,W), die je einen ersten (9,12,30) und einen zweiten Phasenwicklungsanschluss aufweisen, wobei die Phasenwicklungen miteinander verbunden sind,
- wobei einzelne Phasenwicklungen (U,V,W) jeweils gesondert mit pulsweitenmodulierten Spannungssignalen beaufschlagt werden,
- wobei wenigstens eine ausgewählte Phasenwicklung (U,V,W) mit einem konstanten elektrischen Potential (5,6) verbunden wird,
- wobei während der Zeit, in der die ausgewählte Phasenwicklung (U,V,W) mit einem konstanten elektrischen Potential verbunden ist, die Pulse der pulsweitenmodulierten Signale, mit denen die übrigen Phasenwicklungen (U,V,W) beaufschlagt werden, in Abhängigkeit von den Stromrichtungen in den übrigen Phasenwicklungen (U,V,W) gegeneinander um 180° phasenverschoben werden,
- **dadurch gekennzeichnet, dass** die pulsweitenmodulierten Spannungssignale, mit denen die übrigen Phasenwicklungen (U,V,W) beaufschlagt werden, ausschließlich in den Zeiträumen gegeneinander phasenverschoben werden, in denen die Ströme, die durch die übrigen Phasenwicklungen (U,V,W) fließen, in Bezug auf einen elektrischen Verbindungspunkt (1), an dem wenigstens zwei der übrigen Phasenwicklungen (U,V,W) miteinander verbunden sind, dieselbe Stromrichtung haben.

2. Verfahren nach Anspruch 1,
**dadurch gekennzeichnet,**
**dass** aus einer oder mehreren Messungen der Stromstärke einer die Phasenwicklungen (U,V,W) speisenden gemeinsamen Stromquelle (69) die Momentanwerte der Stromstärken in den übrigen Phasenwicklungen (U,V,W) und/oder in der ausgewählten Phasenwicklung (U,V,W) bestimmt werden.

3. Verfahren nach Anspruch 1 oder 2,
**dadurch gekennzeichnet,**
**dass** die Momentanwerte der Stromstärken in den übrigen Phasenwicklungen (U,V,W) und/oder in der ausgewählten Phasenwicklung (U,V,W) geschätzt werden.

4. Nach dem Verfahren nach einem der Ansprüche 1 bis 3 betriebene bürstenlose rotierende elektrische Maschine mit wenigstens drei Phasenwicklungen (U,V,W), die je einen ersten (9, 12, 30) und einen zweiten Phasenwicklungsanschluss aufweisen, wobei die Phasenwicklungen (U,V,W) miteinander verbunden sind,
- mit einer Ansteuervorrichtung (34, 35, 69, 70), die dazu vorgesehen und eingerichtet ist, die einzelnen Phasenwicklungen (U,V,W) jeweils gesondert mit pulsweitenmodulierten Spannungssignalen zu beaufschlagen,
- mit einer ersten Schalteinrichtung (34), die eine erste, ausgewählte Phasenwicklung mit einem konstanten elektrischen Potential einer Spannungsquelle verbindet,
- mit einer Einrichtung (70) zur Ermittlung von Stromstärken in den übrigen Phasenwicklungen (U,V,W), sowie
- mit einer zweiten Schalteinrichtung (35), die dazu eingerichtet ist, in Abhängigkeit von den Stromrichtungen in den übrigen Phasenwicklungen (U,V,W) eine Phasenverschiebung der pulsweitenmodulierten Spannungssignale von 180° an den übrigen Phasenwicklungen (U,V,W) gegeneinander ein- und auszuschalten.

## Claims

1. Method for operating a brushless rotating electric machine having at least three phase windings (U, V, W), which each have a first (9, 12, 30) and a second phase winding connection, wherein the phase windings are connected to one another,
- wherein individual phase windings (U, V, W) are each separately supplied with pulse-width-modulated voltage signals,
- wherein at least one selected phase winding (U, V, W) is connected to a constant electrical potential (5, 6),
- wherein, during the time in which the selected phase winding (U, V, W) is connected to a constant electrical potential, pulses of the pulse-width-modulated signals with which the other phase windings (U, V, W) are supplied are phase-shifted by 180° with respect to one another depending on the current directions in the other phase windings (U, V, W),
- **characterized in that**
the pulse-width-modulated voltage signals with which the other phase windings (U, V, W) are supplied are phase-shifted with respect to one another exclusively in the periods in which the currents flowing through the other phase windings (U, V, W) have the same current direction in relation to an electrical connecting point (1) at which at least two of the other phase windings (U, V, W) are connected to one another.

2. Method according to Claim 1,
**characterized in that**
the instantaneous values of the current intensities in the other phase windings (U, V, W) and/or in the selected phase winding (U, V, W) are determined from one or more measurements of the current intensity of a common current source (69) that feeds the phase windings (U, V, W).

3. Method according to Claim 1 or 2,
**characterized in that**
the instantaneous values of the current intensities in the other phase windings (U, V, W) and/or in the selected phase winding (U, V, W) are estimated.

4. Brushless rotating electric machine operated according to the method according to one of Claims 1 to 3 and having at least three phase windings (U, V, W), which each have a first (9, 12, 30) and a second phase winding connection, wherein the phase windings (U, V, W) are connected to one another,
- having an actuation apparatus (34, 35, 69, 70), which is provided and configured to supply the individual phase windings (U, V, W) each separately with pulse-width-modulated voltage signals,
- having a first switching device (34), which connects a first selected phase winding to a constant electrical potential of a voltage source,
- having a device (70) for identifying current intensities in the other phase windings (U, V, W), and
- having a second switching device (35), which is configured to switch on and off a phase shift of the pulse-width-modulated voltage signals of 180° at the other phase windings (U, V, W) with respect to one another depending on the current directions in the other phase windings (U, V, W).

## Revendications

1. Procédé de fonctionnement d'une machine électrique tournante sans balais comportant au moins trois enroulements de phase (U, V, W) dont chacun comporte des première (9, 12, 30) et seconde bornes d'enroulement de phase, dans lequel les enroulements de phase sont reliés entre eux,
- dans lequel des signaux de tension modulés en largeur d'impulsion sont respectivement appliqués de manière séparée à des enroulements de phase (U, V, W) individuels,
- dans lequel au moins un enroulement de phase (U, V, W) sélectionné est relié à un potentiel électrique constant (5, 6),
- dans lequel, au cours du temps pendant lequel l'enroulement de phase (U, V, W) sélectionné est relié à un potentiel électrique constant, les impulsions des signaux modulés en largeur d'impulsion, qui sont appliquées aux enroulements de phase (U, V, W) restants, sont déphasées de 180° les unes par rapport aux autres en fonction des sens de passage du courant dans les enroulements de phase (U, V, W) restants,
- **caractérisé en ce que** les signaux de tension modulés en largeur d'impulsion, qui sont appliqués aux enroulements de phase (U, V, W) restants, sont déphasés les uns par rapport aux autres exclusivement au cours des périodes pendant lesquelles les courants passant dans les enroulements de phase (U, V, W) restants présentent le même sens de passage du courant, par rapport à un point de liaison électrique (1) au niveau duquel au moins deux des enroulements de phase (U, V, W) restants sont reliés les uns aux autres.

2. Procédé selon la revendication 1, **caractérisé en ce que** les valeurs instantanées des intensités de courant dans les enroulements de phase (U, V, W) restants et/ou dans l'enroulement de phase (U, V, W) sélectionné sont déterminées à partir d'une ou de plusieurs mesures de l'intensité de courant d'une source de courant commune (69) alimentant les enroulements de phase (U, V, W).

3. Procédé selon la revendication 1 ou 2, **caractérisé en ce que** les valeurs instantanées des intensités de courant dans les enroulements de phase (U, V, W) restants et/ou dans l'enroulement de phase (U, V, W) sélectionné sont estimées.

4. Machine électrique tournante sans balais fonctionnant conformément au procédé selon l'une des revendications 1 à 3 et comportant au moins trois enroulements de phase (U, V, W) dont chacun comporte des première (9, 12, 30) et seconde bornes d'enroulement de phase, dans laquelle les enroulements de phase (U, V, W) sont reliés entre eux, comportant
- un dispositif de commande (34, 35, 69, 70) qui est prévu et conçu pour appliquer respectivement de manière séparée des signaux de tension modulés en largeur d'impulsion aux enroulements de phase (U, V, W) individuels,
- un premier dispositif de commutation (34) reliant un premier enroulement de phase sélectionné à un potentiel électrique constant d'une source de tension,
- un dispositif (70) destiné à déterminer des intensités de courant dans les enroulements de phase (U, V, W) restants, et
- un second dispositif de commutation (35) qui est conçu pour activer et désactiver un déphasage de 180° des signaux de tension modulés en largeur d'impulsion les uns par rapport aux autres sur les enroulements de phase (U, V, W) restants en fonction des sens de passage du courant dans les enroulements de phase (U, V, W) restants.
